# EUROPEAN PATENT APPLICATION

(11) **EP 2 355 407 A1**
(43) Date of publication of application: **10.08.2011**
(21) Application number: 10196433.6
(22) Date of filing: 22.12.2010
(51) Int. Cl.: H04L 12/24

(54) **Failure display method, failure setting device and monitor control device**

(30) Priority: 26.01.2010 JP 2010014566
(71) Applicant: Hitachi Ltd., Tokyo 100-8280 (JP)
(72) Inventor: Narita, Hidemasa, Tokyo 100-8220 (JP); Takatori, Koji, Tokyo 100-8220 (JP); Takeuchi, Hiroshi, Tokyo 100-8220 (JP); Kamakura, Masafumi, Tokyo 100-8220 (JP); Murase, Yusuke, Tokyo 100-8220 (JP)
(74) Representative: MERH-IP Matias Erny Reichl Hoffmann

(57) **Abstract**

To provide an apparatus capable of receiving the signals different in various services and various signal types to facilitate an isolation of a fault location. To provide a layer integrated device in which a maintenance person 3001 can arbitrarily select a maintenance method for a maintenance according to needs for maintenance of an individual layer or needs for maintenance with a result of performing an inter-layer processing. A setting screen on which the maintenance person 3001 can select a layer type to manage and a management method is mounted on a setting device 3000. The maintenance person 3001 selects and sets a layer integrated setting or a layer individual setting on a display section 3005 and a setting section 3004. From a set result of the maintenance person 3001, the setting device 3000 or an NE 3007 performs a corresponding process and displays a failure indication.

## Description

The present application claims priority from Japanese patent application JP 2010-014566 filed on January 26, 2010, the content of which is hereby incorporated by reference into this application.

### BACKGROUND OF THE INVENTION

### 1. Field of the Invention

The present invention relates to a failure display method, a failure setting device and a monitor control device.

More particularly, this invention relates to a failure display method, a failure setting device and a monitor control device for use in a communication network configured by stratified apparatuses, using an integrated device that can integrally handle signals on various layers and different in a signal speed, a frame format and so forth, for example, in which failure monitor, maintenance, and isolation of a failure occurrence location when a failure occurs can be realized with a simple constitution, using a setting device called an Element Management System (EMS), for example.

### 2. Description of the Related Art

In recent years, a next generation network configuration called a next generation network (NGN) has been made to deal with an increased traffic and a higher speed and a larger capacity of a network due to a spread of broadband circuits. Also, a transport stratum of the NGN is largely classified into a backbone network, a mobile network, a company network, a personal network and so forth, in which the backbone network is demanded to have the larger capacity, an economy, a simpler operation and a reliability.

For the larger capacity, it is required to deal with an increased capacity with the spread of broadband, and have a flexible expandability. Because of a tremendous increase in the traffic, it is difficult to predict an increase in the network. Also, there is a demand for an apparatus expandable without having influence on an operating service.

For the economy, it is required to reduce costs on both sides of installation and operation. A change of the network configuration due to increased traffic and diversified services is frequently required, and an apparatus that can flexibly deal with it is required. Though each apparatus has been individually managed and operated on a transport layer and a packet layer, and each layer as defined in an OSI reference model, an integration of each apparatus is required. Also, a device for the integration is called a layer integrated device.

For the simpler operation, it is required to reduce a burden on a network administrator with a simple network design and an integrated management. The network configuration has developed into a multi-ring configuration and a mesh configuration from a ring configuration, whereby there is a demand for simplifying a complicate network mesh. An integrated network management of a router network, an access network and so forth is required.

For the reliability, there is a demand for a reliable apparatus that can assure services of the large capacity network, whereby restoration is required under abnormal conditions such as a failure or a disaster.

For the above demands, in the network meshes existing on the transport stratum, to improve the existent configuration of the network by connecting individual apparatuses, which individually exist on the layer required in the network, there is a demand from a communication carrier for an apparatus that integrates those apparatuses on each layer into one for the economy and simpler operation.

Since it is required to increase the signal speed to support various kinds of interface with a WDM, accommodate the efficient line into a next generation SONET for an Ethernet (registered trademark)/TDM/ATM, and provide rapid services in a metropolitan core area with a simpler design and operation management, such apparatus is noted as it can meet such needs. The layer integrated device supports various kinds of interface such as the Ethernet (registered trademark) /TDM/ATM in the same housing or device, and is in the next generation to secure a connectivity of an IP router, an OXC, SONET, WDM and so forth.

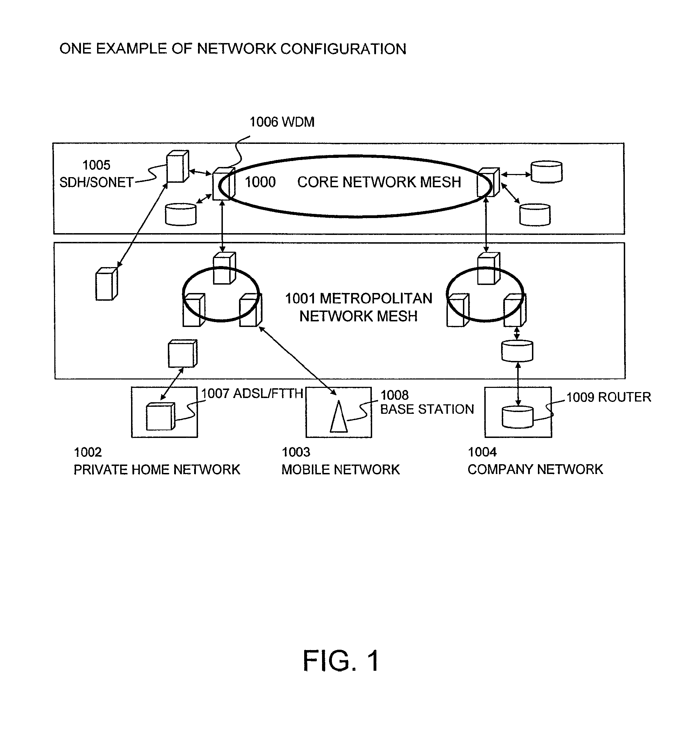

Fig. 1 is a configuration example of a conventional network. The network as shown in Fig. 1 includes a core network (backbone network) 1000, a metropolitan network 1001, and an access network (e.g., a private home network 1002, a mobile network 1003, a company network 1004). Each of a WDM device 1006, an SDH/SONET device 1005, an ADSL/FTTH device 1007, a base station 1008, and a router 1009 includes a function of interface type for each layer required by each network, establishing a point-to-point connection by connecting each network mesh to enable the services to be provided.

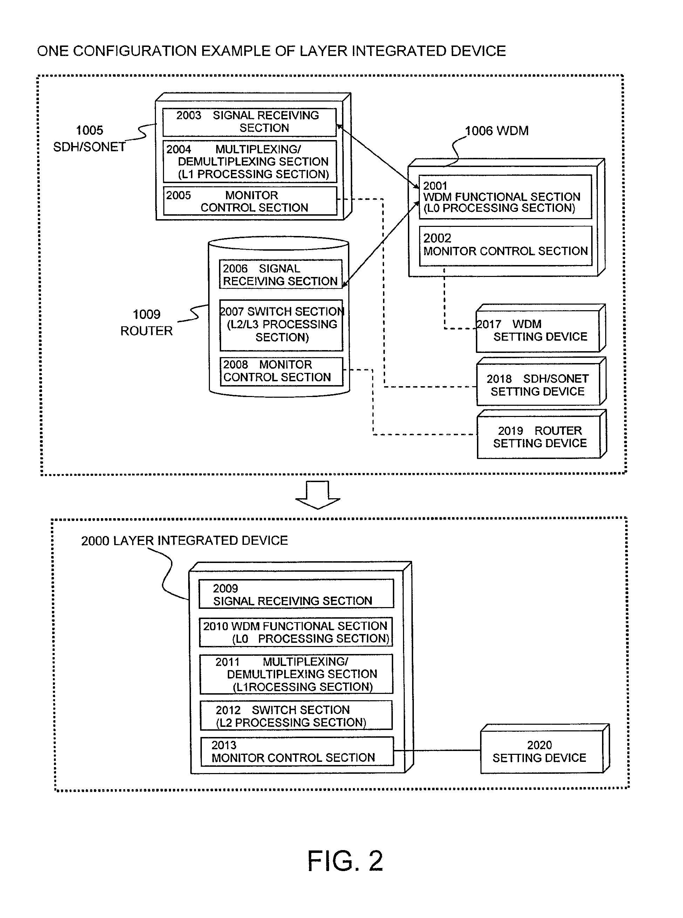

Fig. 2 is a block diagram showing a configuration example of a layer integrated device capable of receiving various layer speed signal.

The WDM device 1006 includes a WDM functional section 2001 for conducting a wavelength multiplexing/demultiplexing of an optical signal and a wavelength conversion of the optical signal and a monitor control section 2002 for monitoring the WDM functional section 2001 in accordance with a control signal from a higher level control such as an Operation System (OpS), as shown in Fig. 2.

The SDH/SONET device 1005 includes a signal receiving section 2003 for receiving a signal from a client apparatus, a multiplexing/demultiplexing section 2004 for multiplexing/demultiplexing the signal converted into an electrical signal, and a monitor control section 2005 for monitoring the signal receiving section 2003 and the multiplexing/demultiplexing section 2004 in accordance with a control signal from the upper-level control such as the OpS.

The router 1009 includes a signal receiving section 2006 for receiving a signal from the client apparatus, a switch section 2007 for switching an electrical signal of that signal, and a monitor control section 2008 for monitoring the signal receiving section 2006 and the switch section 2007 in accordance with a control signal from the upper-level control such as the OpS.

A layer integrated device 2000 can mount the functions of each layer in the same unit, as shown in the under figure, and includes a signal receiving section 2009 for receiving a signal from the client apparatus, a WDM functional section 2010 for the optical signal, a multiplexing/demultiplexing section 2011 for the electrical signal, a switch section 2012 for switching the electrical signal, and a monitor control section 2013 for monitoring each of the functional sections (2009 to 2012) in accordance with a control signal from the upper-level control such as the OpS.

Hence, the layer integrated device 2000 integrates the apparatuses, whereby the signal receiving section and the monitor control section can be shared.

However, even if the layer integrated device is introduced into the network, a maintenance person of the apparatus is involved in a case where a maintenance is divided for each function of the layer and a case where it is not divided in a maintenance system of the apparatus. In the case where the maintenance is divided, the OpS is only notified of a cause alarm of direct cause occurring in the WDM system, even though the service is affected in the switch section for performing the router function due to repercussions with a failure occurring in the WDM system (including the device or transmission path), for example. Hence, the maintenance person in charge of the WDM system can search for a failure occurrence location in a short time, which is effective for rapid recovery, but for a person in charge of the router, there are some cases where it is not possible to grasp a content of influence on the service as an event due to repercussion. Conversely, if failure information of all the layers is notified with the cause alarm without processing an alarm of repercussion, it takes some time to search for the cause alarm, hindering the rapid recovery.

In the future, to cope with the layer integration expected to increase more significantly, the network configuration that can be flexibly operated is sought while these problems are solved.
[Patent Document 1] JP-A-2005-039538, Japanese Patent No. 4002221, "Multi-layer Node Control System"

### SUMMARY OF THE INVENTION

As described above in the Related Art, the layer integrated device can make a collective management of each layer such as the transport layer and the packet layer, each layer as defined in the OSI reference model, and each layer in each network of the core network (backbone network), the metropolitan network and the access network without being aware of different layers, whereby there are a cost merit for introduction of the apparatus and a maintenance operation merit to facilitate an isolation of a fault assessment. However, each communication carrier has the different method, process, form, operation and handling for maintenance and monitor of each layer, whereby in some cases it may be supposedly required that the maintenance and monitor involving the layer integration or the maintenance and monitor independent for each layer can be selected by any settings of the maintenance person. Further, it is required that its setting content is easily distinguishable by the maintenance person.

In the light of the above-mentioned problems, an object of the invention is to provide an apparatus that can receive a signal that is different in various services and various signal types to facilitate an isolation of a fault or a failure location. Also, another object of the invention is to provide a layer integrated device that can make an integrated management of layers and an independent management of each layer on a maintenance and a monitor, using a setting device regarding the maintenance called an EMS, for example.

In order to accomplish the above objects, the invention has a setting screen for enabling a maintenance person to select a layer type and a management method thereof desired to manage or to be managed on the setting device. The setting device judges a signal type setting that is the information of the management method set by the maintenance person, and selects a layer integrated setting or a layer individual setting on a maintenance screen of the layer integrated device. The applied maintenance screen prepares each of the layer integrated setting and the layer individual setting, and displays a screen of the setting device according to the setting. For information of the set layer, the setting device receives a monitor control signal of each layer from a network element (NE), and performs a layer process in the setting device for removing unnecessary information to mask the information of layer that is not a maintenance object. Also, as another means, the NE performs the layer integrated setting or the layer individual setting process, whereby only the information required by the NE is notified to the setting device.

In the invention, in a layer integrated device that integrates functional sections implementing functions required for different signal speeds and frame formats on the transport layer, the packet layer, and different layers as defined in the OSI reference model, for example, there is provided a setting device capable of setting or monitoring inter-layer information among the layers, and having a processing section that does not enable the maintenance person to set or notify the unnecessary information for the maintenance person among the layers.

The setting device of the invention may have a processing section for setting and monitoring the information of each layer and making the maintenance for each layer.

The setting device of the invention may have a layer management setting section for selecting a processing for the inter-layer information or a processing for each layer to be performed.

The setting device of the invention may have a function of displaying a result of selecting the processing for the inter-layer information or the processing for each layer to be performed to the maintenance person.

Also, the invention provides the network element (NE) that can process the inter-layer information by notifying the setting from the outside to the NE, for example, and hold information of the set data processed between the layers and the monitor result, and the set data for each layer and the monitor result.

The layer integrated device of the invention may notify only the set information from the set data and the monitor result held in the NE from the above information set from the outside to the setting device.

According to the invention, there is provided a failure setting device connected to a communication network including a network of a first layer, a network of a second layer at a higher level than the first layer, and/ or a plurality of network elements (NE) provided on each layer and/or having a monitor control section for monitoring a failure, the failure setting device receiving and displaying failure information from each NE, the failure setting device having a setting section for managing setting information, and/or a control section for processing a failure indication based on the setting information, wherein the setting section sets a first setting for performing a processing among the layers or a second setting for performing a layer individual processing, and/or in the case where the first setting is set in the setting section, when a first layer failure occurs on each NE or a transmission path regarding each NE from the monitor control section of each NE, the setting section receives a plurality of failure information including first layer failure information and second layer failure information, and the control section does not notify a second layer failure indication and displays the first layer failure, and/or when a second layer failure occurs on each NE or the transmission path regarding each NE from the monitor control section of each NE, the setting section receives only the second layer failure information, and the control section displays the second layer failure.

With the invention, in the layer integrated device existing in the network where various layers are mixed, the maintenance management corresponding to various needs can be changed into the configuration desired by the maintenance person from the setting device, whereby it is possible to arbitrarily set a plurality of maintenance methods for one kind of layer integrated device.

The maintenance person can make a fault assessment such as specification of the failure or fault occurrence location or discrimination of emergency for quick determination by applying the maintenance management managed in the layer integration. For example, in the management with the layer individual setting, in the case where there is 10GbE over the total wavelength in an 88 wave system for the WDM and 1016 paths are managed at 10GbE, 89496 (88+88×1016) alarms occur, including the alarms among the layers, when the WDM system fails. If the analysis for one alarm requires 2 seconds, it takes 49.7 hours at maximum in calculation. However, in the management with the layer integrated setting, a cause alarm for one failure in the WDM system is only issued, whereby the fault assessment can be made within only two seconds.

### BRIEF DESCRIPTION OF THE DRAWINGS

Fig. 1 is a diagram showing an existent network configuration example to which the invention is applied.
Fig. 2 is a block diagram showing a configuration example of a layer integrated device.
Fig. 3 is a block diagram showing a configuration example of an NE and a setting device according to an embodiment 1.
Fig. 4 is a block diagram showing a configuration example of a control section within the setting device according to the embodiment 1.
Fig. 5 shows a processing sequence (1) within the setting device according to the embodiment 1.
Fig. 6 shows a processing sequence (2) within the setting device according to the embodiment 1.
Fig. 7 is a block diagram showing a configuration example of a monitor control section according to an embodiment 2.
Fig. 8 is a block diagram showing a configuration example of an information management section within the monitor control section according to the embodiment 2.
Fig. 9 shows a processing sequence (1) performed within the monitor control section.
Fig. 10 shows a processing sequence (2) performed within the monitor control section.

### DETAILED DESCRIPTION OF THE PREFERRED EMBODIMENT

This embodiment is particularly in a layer integrated device, and aimed to perform a masking process for a repercussion alarm among layers and facilitate a maintenance of set layer by enabling a maintenance person to arbitrarily set various operation methods on an object layer to perform the maintenance and operation of the layer integrated device, not for the purpose of performing a fault assessment at once.

Two typical embodiments of the invention will be described below using the drawings.

### 1. Embodiment 1

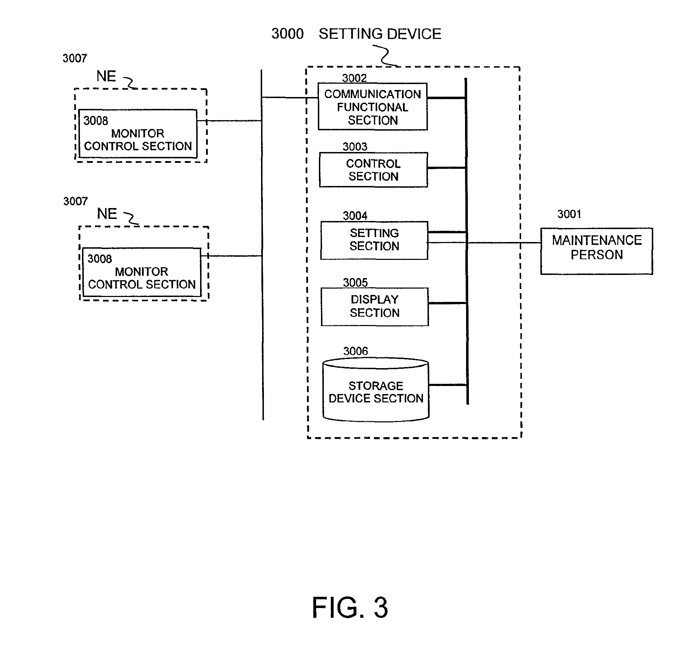

Fig. 3 is a block diagram showing a configuration example of an NE and a setting device according to an embodiment 1.

A setting device 3000 (corresponding to a setting device 2020 in Fig. 2) according to the embodiment 1 of the invention includes a communication functional section 3002 for receiving an NE monitor information 3008 from an NE 3007, a display section 3005, used by a maintenance person 3001 to make a setting and monitor, for displaying maintenance information from a control section 3003, a setting section 3004 for managing a content of a setting information 3010 set by the maintenance person 3001 using the display section 3005, the control section 3003 for processing the NE monitor information 3008 based on the setting information 3010, and a storage device section 3006 for storing and holding the information from the control section 3003. In Fig. 3, the setting device 3000 and the NE monitor control section 3008 may correspond to the setting device 2020 and the monitor control section 2013 as described above in connection with Fig. 2. Or the NE 3007 may be constituted to correspond to each of the WDM device 1006, the SDH/SONET device 1005, the ADSL/FTTH device 1007, the base station 1008, and the router 1009, as described above in connection with Fig. 1. Also, one setting device 3000 may deal with a plurality of NE 3007, as illustrated in the figure.

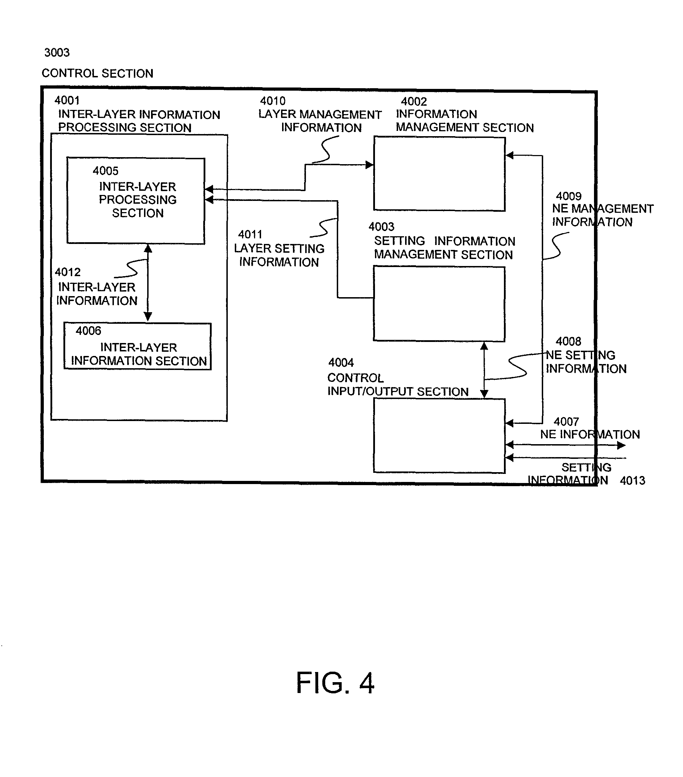

Fig. 4 shows a configuration example of the control section. This configuration of Fig. 4 may be a specific configuration example of the control section 3003 in Fig. 3.

The control section 3003 includes a control input/output section 4004 for receiving device information such as alarm information and performance information of the NE occurring on each layer from the communication functional section 3002 of Fig. 3, and maintenance setting information set by the maintenance person 3001 and sending various kinds of information including them, a setting information management section 4003 for processing an NE setting information 4008 from the control input/output section 4004, an information management section 4002 for managing an NE management information 4009 from the control input/output section 4004, and an inter-layer information processing section 4001 for managing information among the layers based on a layer setting information 4011 from the setting information management section 4003 and a layer management information 4010 from the information management section 4002, processing unnecessary information and sending the processed layer management information 4010 to the information management section 4002. Further, the inter-layer information processing section 4001 includes an inter-layer processing section 4005 for deciding a processing method from the layer setting information 4011 and the layer management information 4010 and performing a processing, and an inter-layer information section 4006 for managing an inter-layer information 4012 that is different depending on the layer configuration and notifying it to the inter-layer processing section 4005.

Specifically, failure information such as an alarm occurring on each layer from the NE, irrespective of the layer type, or acquired information, for example, is notified as an NE information 4007 to the control section 3003, whereby the control input/output section 4004 outputs the NE management information 4009 corresponding to the NE information 4007 to the information management section 4002, and the information management section 4002 manages the information. The information management section 4002 outputs the layer management information 4010 corresponding to the NE management information 4009.

On the other hand, the control input/output section 4004 outputs the NE setting information 4008 corresponding to a setting information 4013 of a layer integrated setting or a layer individual setting that is set by the maintenance person. If the setting information management section 4003 judges that the processing between the layers is required according to the NE setting information 4008, the setting information management section 4003 sends the layer setting information 4011 corresponding to the layer integrated setting to the inter-layer processing section 4005. The inter-layer processing section 4005 acquires a setting method required for the layer integrated setting as the inter-layer information 4012 from the inter-layer information section 4006 where that information is pre-stored. And the inter-layer processing section 4005 masks the failure information between the layers or implements allocation of an alarm name for the layer management information 4010 from the information management section 4002, based on the inter-layer information 4012, and notifies a result to the information management section 4002. The information management section 4002 notifies a failure indication to the display section 3005, based on the result.

On the other hand, if the setting information management section 4003 judges that the layer individual setting in which the processing between the layers is unnecessary is performed according to the setting information 4013 set by the maintenance person, the setting information management section 4003 does not send the layer setting information 4011 to the inter-layer processing section 4005. The information management section 4002 performs a process regarding a layer individual failure and notifies an alarm (failure indication) of each managed layer to the display section 3005.

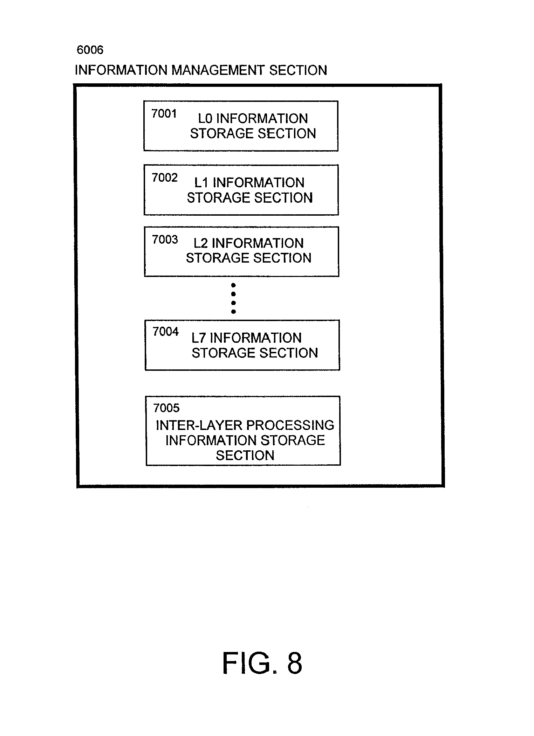

Fig. 8 shows a configuration example of the information management section.

An information management section 6006 (4002) has an information storage section (7001 to 7004) for each layer, and an inter-layer processing information storage section 7005 for storing information with which the processing among the layers is performed. Information for each layer is stored in each of the storage sections 7001 to 7004, and the information with which the processing among the layers is performed is stored in the inter-layer processing information storage section 7005. And the information management section 6006 (4002) reads necessary information from each of the storage sections 7001 to 7005, and notifies it via the control input/output section 4004 to the setting device 3000.

A processing sequence performed in the above setting device will be described below.

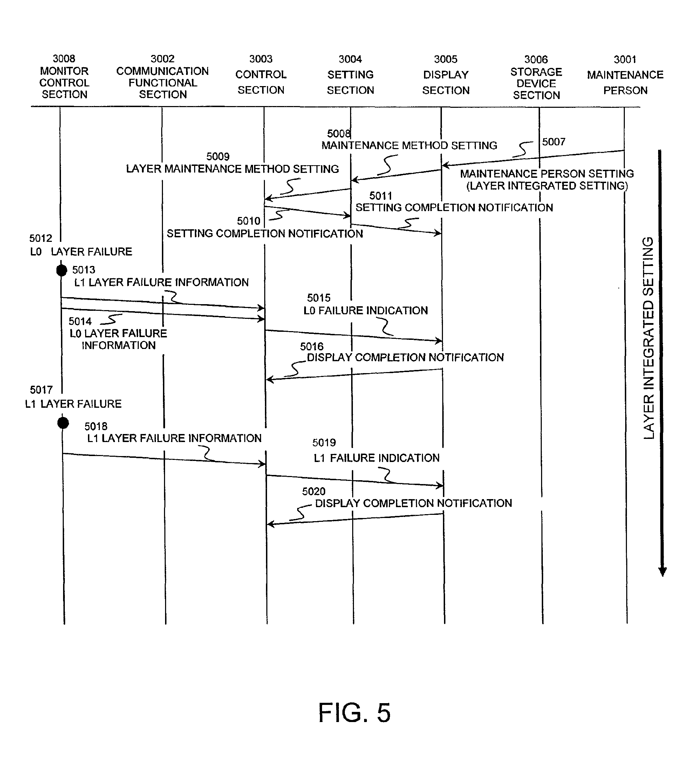

Fig. 5 shows a sequence chart for a process of the layer integrated setting.

First of all, the maintenance person 3001 can select a setting kind of the layer integrated setting or the layer individual setting as the setting for performing the processing among the layers from the display section 3005 of the setting device. Herein, it is supposed that the layer integrated setting is selected. A maintenance person setting 5007 of the layer integrated setting, which is a selection result by the maintenance person 3001, is notified as a maintenance method setting 5008 to the setting section 3004, and managed as a layer maintenance setting method 5009 by the control section 3003. Herein, the control section 3003 makes the settings of performing a processing for failure information between the layers and not displaying an L1 failure and displaying an L0 failure as a failure indication 5015 distinguishable as an L0 layer failure, if an L1 failure information 5013 and an L0 failure information 5014 are received at the same time by the layer maintenance setting method 5009, and displaying the L1 failure, if only the L1 failure information is received. Further, if only the L0 failure information is received, the control section may make the setting of not displaying the L0 failure. The control section 3003 notifies a setting completion notification 5010 to the setting section 3004, if the settings of the layer maintenance setting method 5009 required for a layer integrating process are completed, whereby a setting completion notification 5011 is notified to the display section 3005, and the maintenance person 3001 can recognize that the layer integrated setting of the maintenance person setting 5007 is correctly set.

Herein, it is supposed that a Layer0 (L0) failure 5012 occurs. The L0 layer failure 5012 is meant to be a failure in a WDM system (including the device or transmission path) as one example, but not limited to it. The WDM system is a system using a wavelength multiplexing of an optical signal, in which an SDH signal and a packet signal are transparently transmitted with the optical signal. By the L0 layer failure 5012, a plurality of alarms for the L0 failure information 5014 and the Layer1 (L1) failure information 5013 corresponding to a received signal of a layer 1 are detected by the monitor control section 3008, and notified via the communication functional section 3002 of the setting device to the control section 3003. The control section 3003 recognizes that in a state in which the layer management method is set, the processing between the layers is required from the layer maintenance setting method 5009 of the layer integrated setting, and performs the processing for failure information between the layers, if the L1 failure information 5013 and the L0 failure information 5014 are received at the same time as the layer maintenance method, in which the L1 failure is not displayed but the L0 failure is displayed as the failure indication 5015 distinguishable as the failure of the L0 layer.

Also, it is supposed that a failure 5017 occurs on the layer 1. In this case, with the L1 layer failure 5017, an L1 failure information 5018 is notified via the communication functional section 3002 of the setting device to the control section 3003 by the monitor control section 3008. The control section 3003 recognizes that in a state in which the layer management method is set, the processing between the layers is required from the layer maintenance setting method 5009 of the layer integrated setting, but recognizes that the masking process for the failure information on the other layers is unnecessary, if only the L1 failure information 5018 is received as the layer maintenance method, in which the L1 failure is displayed as a failure indication 5019 distinguishable as the failure of the L1 layer.

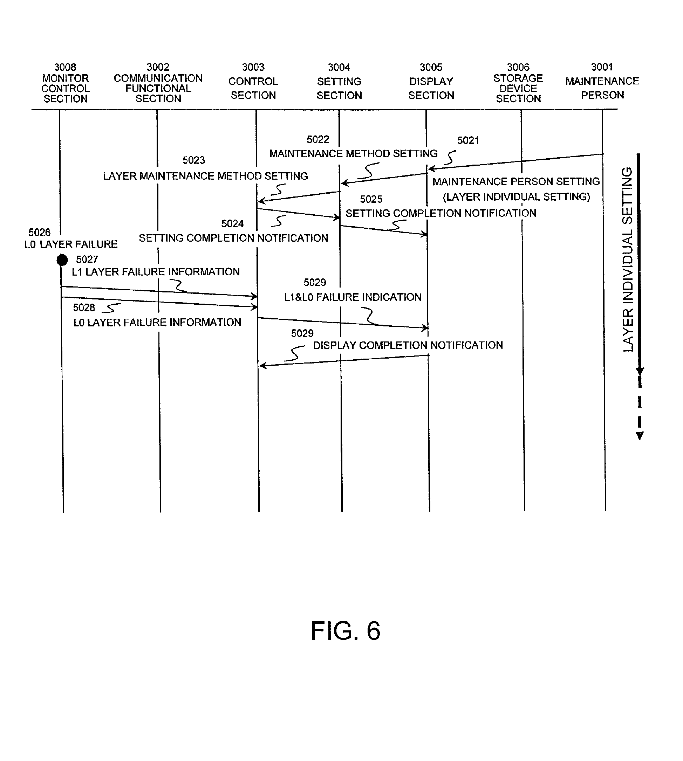

Fig. 6 shows a sequence chart of a process of the layer individual setting.

First of all, the maintenance person 3001, who intends to make a setting for not performing the process among the layers, selects a maintenance person setting 5021 of the layer individual setting from the display section 3005 of the setting device that displays the setting kind of the layer integrated setting or layer individual setting. The information is notified as a maintenance method setting 5022 to the setting section 3004, and managed as a layer maintenance setting method 5023 by the control section 3003. Herein, the control section 3003 makes the settings of performing no processing for failure information between the layers, and displaying the L1 failure and the L0 failure together as a failure indication 5029, if an L1 failure information 5027 and an L0 failure information 5028 are received at the same time by the layer maintenance setting method 5023. Further, if only the L0 failure information or only the L1 failure information is received, the control section may make the settings of displaying the L0 failure or the L1 failure. If the setting of the layer maintenance setting method 5023 is completed, the control section 3003 notifies a setting completion notification 5024 to the setting section 3004, whereby a setting completion notification 5025 is notified to the display section 3005, and the maintenance person 3001 can recognize that the layer individual setting is correctly set.

Herein, it is supposed that a Layer0 failure 5026 occurs. In this case, with the L0 layer failure 5026, the L1 failure information 5027 and the L0 failure information 5028 are notified via the communication functional section 5001 of the setting device to the control section 3003 by the monitor control section 3008. The control section 3003 recognizes that the processing between the layers is unnecessary, because the layer individual setting is made by the layer maintenance setting method 5023, and performs no processing for failure information between the layers, and displays the L1 failure and the L0 failure together as the failure indication 5029, if the L1 failure information 5027 and the L0 failure information 5028 are received at the same time as the layer maintenance method.

### 2. Embodiment 2

Though in the embodiment 1 the processing among the layers is performed by the setting device of the OpS, the setting device usually monitors and controls several thousands of NEs, with a large load imposed on a hardware of the setting device, whereby a high performance hardware for realizing the setting device is required. Hence, in an embodiment 2, the monitor control section of the NE performs the processing among the layers to reduce a load on the setting device. Herein, both its processing result and a processing result for each layer are held in the NE monitor control section, irrespective of the maintenance setting of the maintenance person, to notify only a monitor result corresponding to the setting method set by the maintenance person to the OpS. Thereby, it is necessary that the NE monitor control section monitors only its own NE, in which the hardware may not be too high level for realization. The configuration of the setting device other than the configuration regarding the above processing may be the same of Fig. 3.

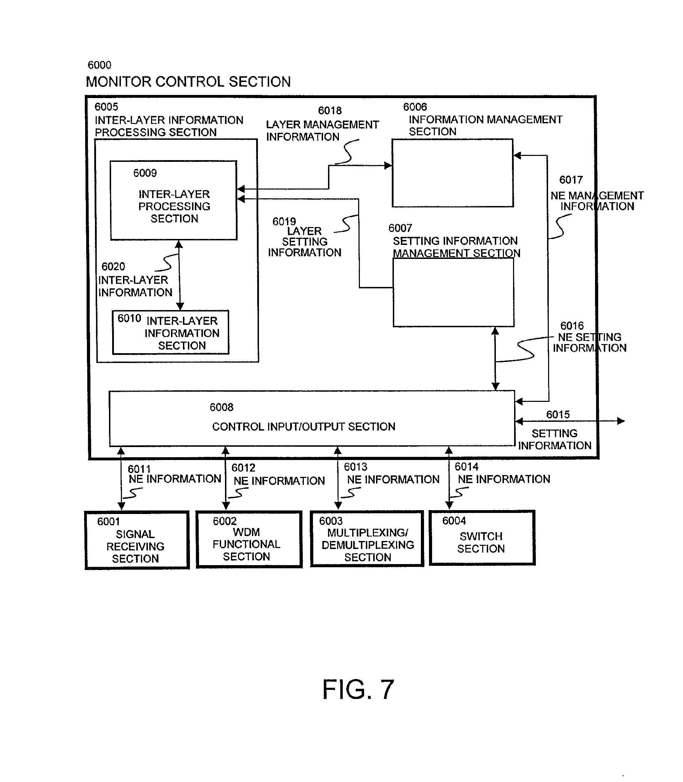

Fig. 7 shows a configuration example of the NE monitor control section.

A monitor control section 6000 includes a control input/output section 6008, a setting information management section 6007, an information management section 6006, and an inter-layer information processing section 6005. Further, the inter-layer information processing section 6005 has an inter-layer processing section 6009 and an inter-layer information section 6010.

The monitor control section 6000 is connected to a signal receiving section 6001, a WDM functional section 6002, a multiplexing/demultiplexing section 6003, and a switch section 6004 within or outside the device. The functional sections (6001 to 6004) may correspond respectively to the functional sections (2009 to 2012) of the layer integrated device 2000 as described above in connection with Fig. 2. Also, the inter-layer information processing section 4001, the information management section 4002, the setting information management section 4003 and the control input/output section 4004 in Fig. 4 correspond to the inter-layer information processing section 6005, the information management section 6006, the setting information management section 6007 and the control input/output section 6008 in Fig. 7, respectively. Further, the inter-layer processing section 4005 and the inter-layer information section 4006 in Fig. 4 correspond to the inter-layer processing section 6009 and the inter-layer information section 6010 in Fig. 7, respectively. And the operation of each section is roughly the same as described above, except for an input/output operation of the control input/output section 6008.

The failure information occurring within the device is notified from each functional section (6001 to 6004) to the monitor control section 6000. Also, a setting information 6015 set by the maintenance person is set from the monitor control section 6000 to each functional section (6001 to 6004). The monitor and setting are performed using NE information (6011 to 6014).

If a failure occurs within the NE, the failure is detected only in the functional section for receiving a signal among the signal receiving section 6001, the WDM functional section 6002, the multiplexing/demultiplexing section 6003 and the switch section 6004, though all the functions are not effective, and the detected failure information is notified as the NE information (6011 to 6014) to the control input/output section 6008, and notified as an NE management information 6017 to the information management section 6006. The information management section 6006 stores the NE management information 6017 that is all the failure information from each functional section. On the other hand, the information management section 6006 notifies the NE management information 6017 as a layer management information 6018 to the inter-layer processing section 6009. The inter-layer processing section 6009 detects a failure among the layers, or suppresses an undesired alarm, based on the layer management information 6018 and an inter-layer information 6020 acquired from the inter-layer information section 6010. And the inter-layer processing section 6009 notifies the processing result as the layer integrated setting to the information management section 6006, and the information management section 6006 stores the result. That is, the information management section 6006 holds both the information of each functional section detected in each functional section (6001 to 6004) and the information of masking the unnecessary alarm between the layers.

And the information as to whether the setting method to be displayed on the setting device, which is set by the maintenance person, is the layer integrated setting or the layer individual setting, is notified as the setting information 6015 to the monitor control section 6000. Upon its request, the monitor control section 6000 selects information for each layer or processing information between the layers from the information stored in the information management section 6006 and responds to the setting device.

That is, first of all, an NE setting information 6016 is outputted from the control input/output section 6008, corresponding to the setting information 6015 of the layer integrated setting or the layer individual setting set by the maintenance person. If the setting information management section 6007 judges that the processing between the layers is required with the NE management information 6017, the setting information management section 6007 sends a layer setting information 6019 corresponding to the layer integrated setting to the inter-layer processing section 6009. The inter-layer processing section 6009 acquires the setting method required for the layer integrated setting as the inter-layer information 6020 from the inter-layer information section 6010 where that information is pre-stored. And the inter-layer processing section 6009 masks the failure information between the layers or implements allocation of the alarm name for the layer management information 6018 from the information management section 6006, based on the inter-layer information 6020, and notifies a result to the information management section 6006. The information management section 6006 notifies the failure indication to the display section of the setting device, based on the result.

On the other hand, if the setting information management section 6007 judges that the layer individual setting for which the processing between the layers is unnecessary is performed with the setting information 6015 set by the maintenance person, the setting information management section 6007 does not send the layer setting information 6019 to the inter-layer processing section 6009. The information management section 6006 performs the processing regarding the layer individual failure, and notifies the alarm (failure indication) of each managed layer to the display section of the setting device.

The configuration example of the information management section may be the same as shown in Fig. 8.

A processing sequence performed in the monitor control section will be described below.

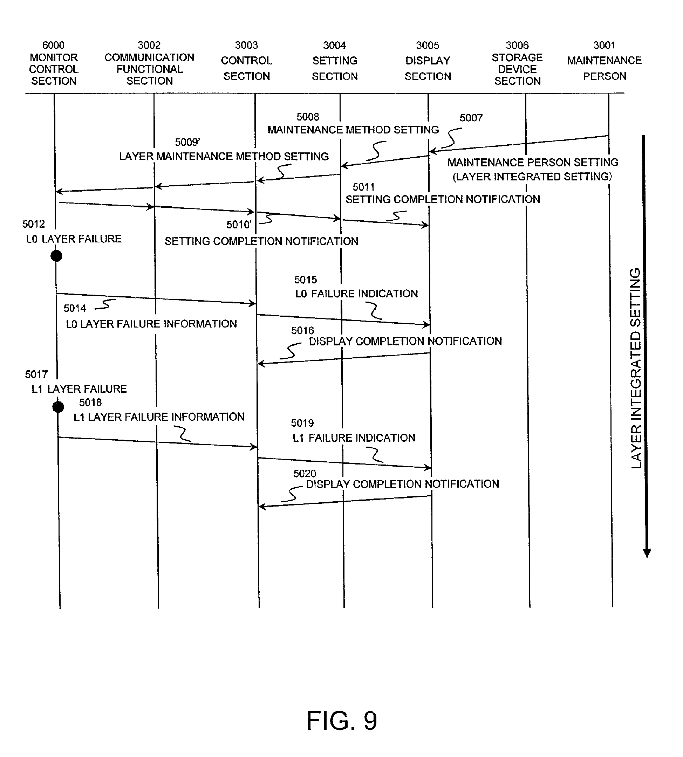

Fig. 9 shows a sequence chart for a process of the layer integrated setting. The differences between Figs. 5 and 9 exist particularly in a point that a layer maintenance method setting 5009' and a setting completion notification 5010' are executed for the monitor control section 6000, and a point that the layer maintenance method by the layer integrated setting is executed in the control section 3003 in Fig. 5 but executed in the monitor control section 6000 in Fig. 9. The other configuration is the same as described above in connection with Fig. 5.

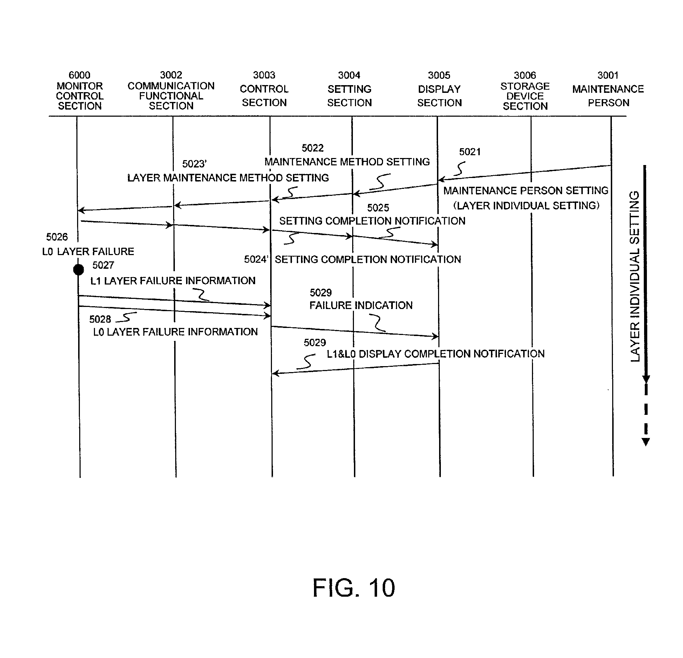

Fig. 10 shows a sequence chart for a process of the layer individual setting. The differences between Figs. 5 and 10 exist particularly in a point that a layer maintenance method setting 5023' and a setting completion notification 5024' are executed for the monitor control section 6000, and a point that the layer maintenance method by the layer individual setting is executed in the control section 3003 in Fig. 5 but executed in the monitor control section 6000 in Fig. 9. The other configuration is the same as described above in connection with Fig. 6.

With the diversification of signal species of the layer connected to the network, implement species constituting the network increases, whereby there is apprehension that the operability of the maintenance person is not only worsen but also an amount of capital investment becomes enormous. Also, there is a demand for a transmitting apparatus that can flexibly deal with the connection work of the network apparatuses complicated in many species.

To solve this problem, the layer management is enabled according to needs of the maintenance person only by an operation from the upper-level control section, and can be operated by the same apparatus without being aware of the maintenance system different in the communication carrier and the maintenance person, whereby a utility value of the invention is very high.

The processing section for each layer such as the layer L0, and the layer L1 is not limited to the above example, but the invention is applicable to various processing sections for the layers L0 and L1. Also, the invention is not limited to the layers L0, L1, but applicable to other various layers L2, L3, ...

## Claims

1. A failure display method for use in a communication network including:
a network of a first layer;
a network of a second layer at a higher level than the first layer;
a plurality of network elements (NE) (3007) provided on each layer and having a monitor control section (3008; 6000) for monitoring a failure; and
a setting device (3000) for receiving and displaying failure information from each NE (3007), the setting device (3000) having a setting section (3004) for managing setting information (3010) and a control section (3003) for processing a failure indication based on the setting information (3010);
wherein
the setting section (3004) of the setting device (3000) sets a first setting for performing a processing among layers or a second setting for performing a layer individual processing; and
in the case where the first setting is set in the setting section,
when a first layer failure occurs on each NE (3007) or a transmission path regarding each NE (3007), the monitor control section (3008; 6000) of each NE (3007) detects a plurality of failures including the first layer failure, and a second layer failure corresponding to the second layer accommodating the NE (3007), and notifies a plurality of failure information including first layer failure information and second layer failure information to the setting device (3000), and the control section (3003) of the setting device (3000) does not notify a second layer failure indication and displays the first layer failure; and
when the second layer failure occurs on each NE (3007) or the transmission path regarding each NE (3007), the monitor control section (3008; 6000) of each NE detects the second layer failure, and notifies only the second layer failure information to the setting device (3000), and the control section (3003) of the setting device (3000) displays the second layer failure.

2. The failure display method according to claim 1, wherein in the case where the second setting is set in the setting section (3004), when the first layer failure occurs on each NE (3007) or the transmission path regarding each NE (3007), the monitor control section (3008; 6000) of each NE (3007) detects the plurality of failures including the first layer failure, and the second layer failure corresponding to the second layer accommodating the NE (3007), and notifies both the first layer failure information and the second layer failure information to the setting device (3004), and the control section (3003) of the setting device (3000) displays each of the first layer failure and the second layer failure.

3. A failure setting device connected to a communication network including:
a network of a first layer;
a network of a second layer at a higher level than the first layer; and
a plurality of network elements (NE) (3007) provided on each layer and having a monitor control section (3008; 6000) for monitoring a failure;
the failure setting device (3000) receiving and displaying the failure information from each NE (3007);
the failure setting device (3000) comprising:
a setting section (3004) for managing setting information (3010); and
a control section (3003) for processing a failure indication based on the setting information (3010);
wherein
the setting section (3004) sets a first setting for performing a processing among layers or a second setting for performing a layer individual processing; and
in the case where the first setting is set in the setting section,
when a first layer failure occurs on each NE (3007) or a transmission path regarding each NE (3007), the setting section (3004) receives a plurality of failure information including first layer failure information and second layer failure information, from the monitor control section (3008; 6000) of each NE (3007), and the control section (3003) does not notify a second layer failure indication and displays the first layer failure; and
when a second layer failure occurs on each NE (3007) or the transmission path regarding each NE (3007), the setting section (3004) receives only the second layer failure information, from the monitor control section (3008; 6000) of each NE (3007), and the control section (3003) displays the second layer failure.

4. The failure setting device according to claim 3, wherein the control section (3003) comprises:
an inter-layer information section (4006) for pre-storing inter-layer information (4012) regarding a process corresponding to the first setting and a layer organization,
an inter-layer processing section (4005) for acquiring the inter-layer information (4012) from the inter-layer information section (4006) and performing a masking process for inter-layer failure information based on the inter-layer information (4012), if the setting information is the first setting, and
an information management section (4002) for notifying a failure indication to the setting section (3004) in accordance with a processing result by the inter-layer processing section (4005).

5. The failure setting device according to claim 4, wherein the information management section (4002) notifies the failure indication of each layer to the setting section (3004) without using the inter-layer processing section (4005), if the setting information is the second setting.

6. A failure display method for use in a communication network including:
a network of a first layer;
a network of a second layer at a higher level than the first layer;
a setting device (3000) for managing setting information (3010);
a functional section provided on each layer and corresponding to a plurality of network elements (NE) (3007); and
a monitor control section (3008; 6000) for receiving failure information from each NE (3007) and processing a failure indication based on the setting information (3010), the monitor control section (3008; 6000) connected to the setting device (3000) and the plurality of the functional sections;
wherein
the setting device (3000) sets a first setting for performing a processing among layers or a second setting for performing a layer individual processing; and
in the case where the first setting is set in the setting section,
when a first layer failure occurs on each NE (3007) or a transmission path regarding each NE (3007), each functional section detects a plurality of failures including the first layer failure and a second layer failure regarding the second layer accommodating the NE (3007), and notifies both first layer failure information and second layer failure information to the monitor control section (3008; 6000), and the monitor control section (3008; 6000) does not notify a second layer failure indication and displays the first layer failure on the setting device (3000); and
when the second layer failure occurs on each NE (3007) or the transmission path regarding each NE (3007), each functional section detects the second layer failure, and notifies only the second layer failure information to the monitor control section (3008; 6000), and the monitor control section (3008; 6000) displays the second layer failure on the setting device (3000).

7. The failure display method according to claim 6, wherein in the case where the second setting is set in the setting device (3000), when the first layer failure occurs on each NE (3007) or the transmission path regarding each NE (3007), each functional section detects the plurality of failures including the first layer failure, and the second layer failure corresponding to the second layer accommodating the NE (3007), and notifies both the first layer failure information and the second layer failure information to the monitor control section (3008; 6000), and monitor control section (3008; 6000) displays each of the first layer failure and the second layer failure on the setting device (3000).

8. A monitor control device connected to a communication network including:
a network of a first layer;
a network of a second layer at a higher level than the first layer;
a setting device (3000) for managing setting information (3010) set by a maintenance person (3001); and
a functional section provided on each layer and corresponding to a plurality of network elements (NE) (3007);
the monitor control device comprising:
a monitor control section (3008; 6000) for receiving failure information from each NE (3007) and processing a failure indication based on the setting information (3010); and
a receiving section (6001) for receiving the setting information setting a first setting for performing a processing among layers or a second setting for performing a layer individual processing from the setting device; wherein
in the case where the first setting is set in the setting device,
when a first layer failure occurs on each NE (3007) or a transmission path regarding each NE (3007), the monitor control section (3008; 6000) receives both first layer failure information and second layer failure information from each functional section, does not notify a second layer failure indication and displays the first layer failure on the setting device (3000); and
when a second layer failure occurs on each NE (3007) or the transmission path regarding each NE (3007), the monitor control section (3008; 6000) receives only the second layer failure information from each functional section, and displays the second layer failure on the setting device (3000).

9. The monitor control device according to claim 8, wherein the monitor control section (3008; 6000) comprises:
an inter-layer information section (6010) for pre-storing a process corresponding to the first setting and inter-layer information (6020) regarding a layer organization;
an inter-layer processing section (6009) for acquiring the inter-layer information (6020) from the inter-layer information section (6010) and performing a masking process for inter-layer failure information based on the inter-layer information, if the setting information is the first setting; and
an information management section (6006) for notifying the failure indication to the setting section in accordance with a processing result by the inter-layer processing section (6009).

10. The monitor control device according to claim 9, wherein the information management section (6006) notifies the failure indication of each layer to the setting device (3000) without using the inter-layer processing section (6009) if the setting information is the second setting.
